# EUROPÄISCHE PATENTANMELDUNG

(11) **EP 1 505 311 A1**
(43) Veröffentlichungstag der Anmeldung: **09.02.2005**
(21) Anmeldenummer: 04018456.6
(22) Anmeldetag: 04.08.2004
(51) Int. Cl.: F16F 1/38

(54) **Lagerbuchse**

(30) Priorität: 06.08.2003 DE 10335914
(71) Anmelder: ZF FRIEDRICHSHAFEN Aktiengesellschaft, 88038 Friedrichshafen (DE)
(72) Erfinder: Schäfer, Christof, 53489 Sinzig (DE)

(57) **Zusammenfassung**

Lagerbuchse (1), bestehend aus einem Innenrohr (2), einem konzentrisch oder exzentrisch zum Innenrohr angeordneten Außenteil (3) und einem dazwischen eingesetzten Gummiteil (4), wobei das Außenteil nach der Montage über mindestens einen Teilbereich seiner axialen Länge mit einer nach radial innen verlaufenden Einschnürung (5) versehen ist.

## Beschreibung

Die Erfindung bezieht sich auf eine Lagerbuchse, bestehend aus einem Innenrohr, einem konzentrisch oder exzentrisch zum Innenrohr angeordneten Außenteil und einem dazwischen eingesetzten Gummiteil.

Es sind bereits Lagerbuchsen bekannt (DE 101 30 306 A1), bei denen mindestens zwei Rohre koaxial zueinander angeordnet sind und mittels eines gummielastischen Elastomers miteinander verbunden sind. Zur Erzeugung einer Vorspannung auf das gummielastische Elastomerteil wird eines der Rohre nach dem Vulkanisiervorgang in seinem Durchmesser verändert, in diesem Fall wird das Innenrohr aufgeweitet, es ist jedoch vorstellbar, dass auch das Außenrohr in seinem Durchmesser verkleinert werden kann.

Aufgabe der Erfindung ist es, eine Lagerbuchse nach dem Vulkanisier- oder Montagevorgang und während des anschließenden Kalibrierens derart zu verformen, dass eine ausreichende Druckspannung in axialer Richtung erzielt wird.

Zur Lösung dieser Aufgabe ist erfindungsgemäß vorgesehen, dass das Außenteil nach der Kalibrierung über mindestens einen Teilbereich seiner axialen Länge mit einer nach radial innen verlaufenden Einschnürung versehen ist.

Hierbei ist von Vorteil, dass durch die Einschnürung geforderte axiale Kennlinien erzielt werden können, wobei auch sehr große Steifigkeitsraten in den unterschiedlichen radialen Richtungen erzielbar sind. Durch eine unterschiedliche Tiefe der Einschnürung lassen sich Steifigkeiten des Gummiteiles sowie die möglichen Auslenkungswege des Innenrohres gegenüber dem Außenteil beeinflussen. In der Praxis bedeutet dies, dass verschiedene Lagerbuchsen mit einem gleichen Gummiteil versehen werden, jedoch durch eine unterschiedliche Geometrie der jeweiligen Einschnürung auf verschiedene Anwendungsfälle abgestimmt werden kann. Hierbei ist von Vorteil, dass gleiche Vulkanisationswerkzeuge verwendet werden können und lediglich die Kalibrierungswerkzeuge sich unterscheiden.

Darüber hinaus ist von Vorteil, dass größere axiale und/oder Verdrehbewegungen des Innenteils relativ zum Außenteil in beiden Richtungen möglich sind, es lassen sich also unerwünschte Kennliniensprünge oder Gummiabrieb vermeiden. Im Fahrbetrieb wirkt sich das derart aus, dass bei Einleitung einer axialen Last auf das Innenteil, relativ zum Außenteil, die lastseitige Innenteilkontur sich der konischen Kontur des Außenteiles nähert, wobei sich gleichzeitig die gegenüberliegenden Konturen des Innen- und Außenteiles voneinander entfernen. Ein Ablösen des Gummis wird dadurch vermieden.

Des weiteren ist von Vorteil, dass durch die Erzeugung einer Einschnürung sich eine Kaltverfestigung des Außenteiles einstellt und je nach Kontur der Einschnürung eine höhere Steifigkeit der Lagerbuchse erzielbar ist. Es lässt sich dabei die Ovalität des Außenteiles verringern, so dass eine bessere Maßhaltigkeit erzielt werden kann. Vorteilhaft ist des weiteren, dass für die Herstellung der Lagerbuchsen ein zylindrisches Außenteil verwendet werden kann. Die zu vulkanisierende Gummikontur ist hinterschnittfrei, so dass einfache Vulkanisationswerkzeuge Verwendung finden können. Ein weiterer Vorteil liegt darin, dass durch die Einschnürung und dem Zusammenspiel mit Innenteil-/ Gummikontur auf zusätzliche Axialanschläge verzichtet werden kann.

Nach einem weiteren wesentlichen Merkmal ist vorgesehen, dass die Einschnürung im Querschnitt gesehen eine sphärische oder kugelförmige Kontur aufweist. Vorteilhaft ist hierbei, dass bei einer sphärischen oder kugelförmigen Einschnürung an den Stirnseiten des Innenteiles auf Axialanschläge verzichtet werden kann. Eine sphärische oder kugelförmige Einschnürung erlaubt auch eine Gestaltung der Lagerbüchse, indem das Lager in radialer Richtung hart und für kardanische Bewegungen weich ausgebildet werden kann. Lagerbuchsen, die in der Vorderachse eines Fahrzeuges Anwendung finden, werden oftmals in radialer Richtung hart ausgebildet, wobei die Bewegungen des Lenkers der Vorderachse eine weiche Kardanik erfüllen soll. Derartige Lager sind sehr verschleißanfällig, da die kardanische Bewegung mit vielen Spannungsspitzen einhergeht. Durch die vorgeschlagene Einschnürung lässt sich die radiale Kennlinie sehr hart gestalten und damit die Schichthöhe des Gummiteiles verringern, und damit lassen sich die Spannungsspitzen bei einer kardanischen Bewegung entsprechend reduzieren, bzw. die kardanische Kennlinie lässt sich weich ausbilden. Die Einschnürung erzeugt auch im Zusammenspiel mit der Gummi- und Innenteilkontur eine axiale Kennlinienunterstützung.

Eine weitere Ausgestaltung sieht vor, dass die Einschnürung über mindestens einen Teil der Umfangsfläche des Außenteils verlaufend angeordnet ist. Bei dieser Ausführungsform werden nicht umlaufende Einschnürungen vorgesehenen, sondern es lassen sich problemlos über der Umfangsfläche des Außenteiles partiell angeordnete Einschnürungen vorsehen.

Nach einer wesentlichen Ausführungsform ist vorgesehen, dass das Innenteil auf mindestens einer Stirnseite mit einem Flansch versehen ist. Mit Vorteil ist dabei vorgesehen, dass der Flansch form- und/oder kraftschlüssig mit dem Innenrohr verbunden ist. Der Flansch ermöglicht im Zusammenspiel mit der Gummi- und Außenteilkontur die beidseitige axial geforderte Kennlinie, ohne Unterstützung der Anbaukomponenten.

Eine besonders günstige Ausführungsform sieht vor, dass das Gummiteil mindestens eine Ausnehmung aufweist. Vorteilhaft ist hierbei, dass durch die Verwendung mindestens einer im Gummiteil angeordneten Ausnehmung verschiedene Steifigkeitsraten in unterschiedlichen radialen Richtungen ermöglicht werden, da der Steg des Gummiteiles zwischen zwei Ausnehmungen um ein vielfaches härter ausgebildet ist, als die Vorspannung des Gummiteiles im Bereich der Ausnehmung. Die Unterschiede in den Steifigkeiten lassen sich dabei in Verhältnissen von bis zu 10:1 ausbilden, derartige Verhältnisse sind mit konventionellen Lagerbuchsen nicht ohne besondere Hilfsmittel erzielbar.

Nach einer weiteren Ausgestaltung ist vorgesehen, dass das Innenrohr auf seinem, dem Gummiteil zugewandten, Außenumfang mindestens auf einem Teilbereich eine konische Umfangsfläche oder dass der Außenumfang auf mindestens einem Teilbereich eine doppelt konische Umfangsfläche aufweist. Innenrohre mit einer konischen Umfangsfläche oder auch einer doppelt konischen Umfangsfläche haben den Vorteil, dass die axiale Kennlinie des Gummiteiles sowie die axiale Wegbegrenzung des Gummiteiles durch die entsprechende konische Umfangsfläche des Innenrohres erfolgt. Derartige Konstruktionen lassen sich anwenden, wenn die Einbausituation keine Elemente zur Wegbegrenzung an den Stirnseiten des Innenrohres zulassen.

Eine besonders vorteilhafte Ausführungsform sieht vor, dass das Innenrohr einen radial nach außen gerichteten Absatz aufweist. Dieser Absatz ragt dabei so in das Gummiteil hinein, dass dieser vom Gummiteil vollständig umgeben ist. Auf diese Weise ist das Gummiteil hinsichtlich seiner axialen Lage zusätzlich kraft- und formschlüssig zum Innenrohr festgelegt und es lässt sich die Steifigkeit des Lagers bezüglich der axialen Richtung auf verschiedene Anwendungsfälle abstimmen.

Besonders günstig ist die Lagerbuchse zudem gestaltet wenn das Außenteil an zumindest einem Ende eine nach der Kalibrierung nach innen verlaufende Kante aufweist, so dass der an dem Innenrohr befindliche Absatz in axialer Richtung der Lagerachse zwischen dieser Kante und der Einschnürung des Außenrohres angeordnet ist. Diese Anordnung erlaubt es, dass weder das Innenrohr noch das Außenteil mit dem Gummiteil mittels beispielsweise Vulkanisation stoffschlüssig verbunden sein muß. Vielmehr ist das Gummiteil lediglich kraft- und formschlüssig zwischen dem Innenrohr und dem Außenteil angeordnet, so dass auf eine aufwendige Vulkanisation verzichtet werden kann. Auch ist möglich, das Gummiteil lediglich an dem Innenrohr oder dem Außenrohr anzuvulkanisieren, wodurch auch der Fertigungsaufwand minimiert werden kann.

Bevorzugte Ausführungsbeispiele der Erfindung sind in den Zeichnungen schematisch dargestellt.

Es zeigt:
Figur 1 und 2 eine Lagerbuchse mit einer Einschnürung in zwei verschiedenen Schnittdarstellungen
Figur 3 und 4 eine Lagerbuchse im Schnitt, wobei das Innenteil an einer Stirnseite mit einem Flansch versehen ist
Figur 5 und 6 eine weitere Ausführungsform einer Lagerbuchse, bei der das Innenrohr mit einer doppelt konischen Umfangsfläche versehen ist
Figur 7 eine weitere Alternative einer Lagerbuchse
Figur 8 eine weitere Ausführungsform einer Lagerbuchse, bei der das Innenrohr einen Absatz aufweist
Figur 9 eine Lagerbuchse gemäß Figur 8, bei das Gummiteil an dem Außenteil anvulkanisiert ist
Figur 10 eine Lagerbuchse gemäß Figur 8 vor der Kalibrierung, bei der das Gummiteil an dem Innenrohr und dem Außenteil anvulkanisiert ist
Figur 11 eine Lagerbuchse gemäß Figur 10 nach der Kalibrierung.

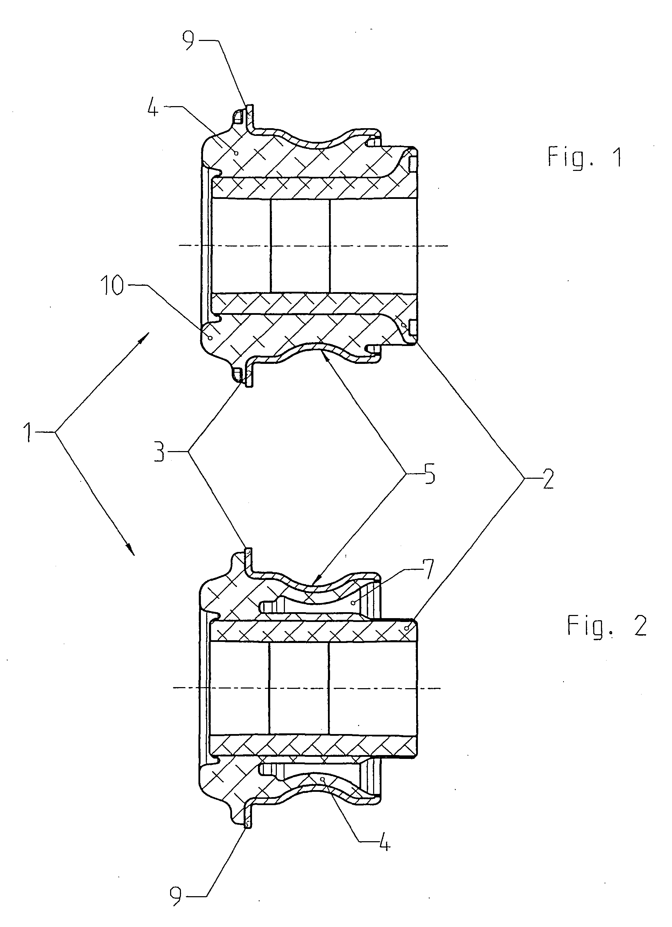

Die in Figur 1 und 2 dargestellte Lagerbuchse 1 besteht im wesentlichen aus dem Innenrohr 2, dem Außenteil 3 sowie dem zwischen dem Innenrohr 2 und dem Außenteil 3 angeordneten Gummiteil 4. Das Gummiteil 4 ist an dem Innenteil 2 sowie an dem Außenteil 3 anvulkanisiert. Es ist jedoch auch möglich, dass keine Vulkanisation oder nur eine einseitige Vulkanisation vorhanden sein kann. Aus der Figur 2 ist die Ausnehmung 7 zu entnehmen, von diesen Ausnehmungen 7 sind bei dieser Lagerbuchse 1 mindestens zwei auf dem Umfang des Gummiteiles 4 verteilt angeordnete Ausnehmungen 7 vorgesehen.

Das Außenteil 3 ist mit einer nach radial innen verlaufenden Einschnürung 5 versehen. Diese Einschnürung 5 wird nachdem das Gummiteil 4 einvulkanisiert ist in einer Kalibrierform, ausgehend von einem zylindrischen Außenteil, erzeugt. Die Schulter 9 sowie der Ansatz 10 des Gummiteiles 4 bilden in dieser Ausführungsform eines Kraftfahrzeuges, zusammen mit der Einschnürungsgeometrie, die Voraussetzung für die axiale Kennlinie, nachdem , die Lagerbuchse 1 in einer Fahrwerkskomponente montiert ist.

Aus der Schnittdarstellung der Figur 1 und 2 sind die Ausnehmungen 7 zu erkennen, so dass wie Figur 1 zeigt zwischen zwei benachbarten Ausnehmungen 7 jeweils einen Steg im Gummiteil 4 vorhanden ist, der in radialer Richtung eine größere Steifigkeit aufweist, als das Gummiteil 4 im Bereich der Ausnehmung 7.

Die radiale Einschnürung 5 des Außenteiles 3 bewirkt, dass das Gummiteil 4 auch in axialer Richtung eine Vorspannung erhält.

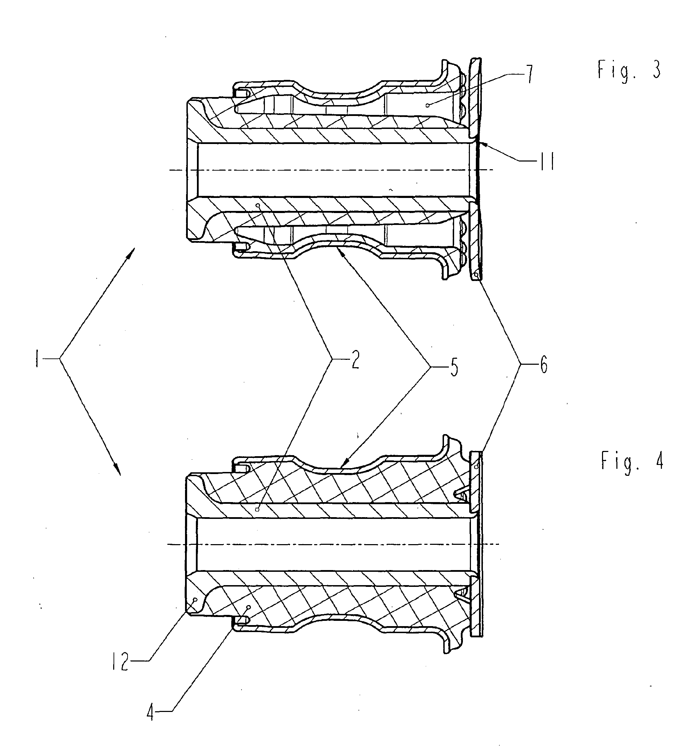

Aus den Figuren 3 und 4 ist eine weitere Ausführungsform einer Lagerbuchse dargestellt, bei der wiederum zwischen dem Innenrohr 2 und dem Außenteil 3 ein Gummiteil 4 angeordnet ist. Das Innenteil 2 ist dabei mit einem Flansch 6 versehen, der nach der Vulkanisation mit dem Innenteil 2 zusammengefügt wird. Alternativ ist es möglich ein Innenteil, mit jeweils mindestens einem partiellen Flansch pro Stirnseite, auch als Einzelteil der Vulkanisation zuzuführen. Dadurch kann der anschließende Montageprozess entfallen.

Die Ausnehmungen 7 im Gummiteil 4 sind dabei dem Flansch 6 benachbart. Die zwischen zwei benachbarten Ausnehmungen 7 verbleibenden Stege im Gummiteil 4 sind, wie Figur 4 zeigt, am Flansch 6 abgestützt und bilden dadurch zusammen mit der Einschnürung und der gegenüberliegenden Steg-/Innenteilkontur u.a. die Basis für die axiale Kennlinie, ohne auf die Unterstützung, hervorgerufen durch die Montage mit Anbauteilen, zurückzugreifen.

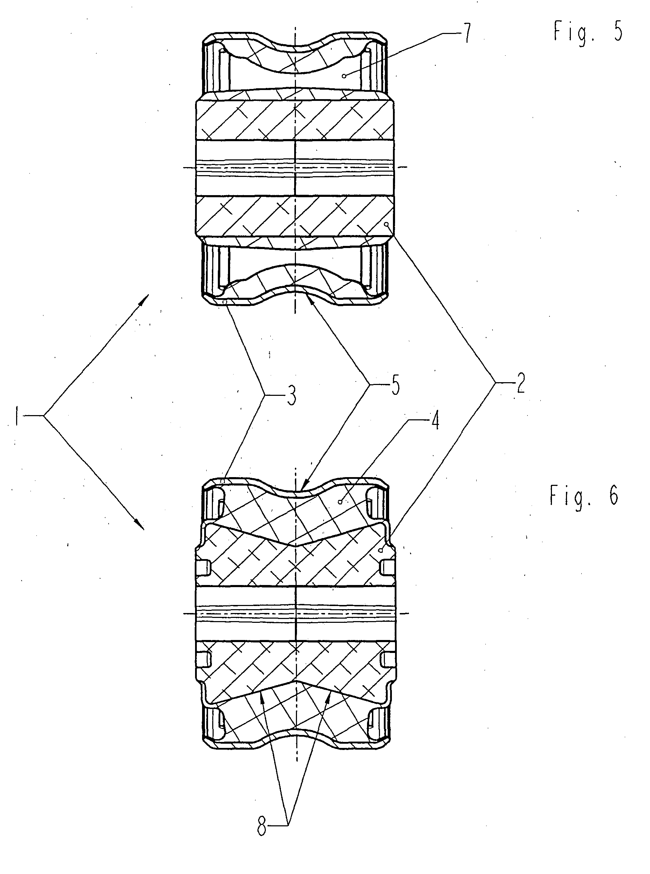

In den Figuren 5 und 6 ist eine weitere Ausführungsform einer Lagerbuchse dargestellt, wobei zwischen dem Innenteil 2 und dem Außenteil 3 das Gummiteil 4 angeordnet ist. Das Innenteil 2 ist mit einer mindestens partiell doppelt konischen Umfangsfläche 8 versehen, an der das Gummiteil 4 sich in axialer Richtung abstützen kann. Wird in diesem Ausführungsbeispiel nach der Vulkanisation das bis dahin zylindrische Außenteil 3 in dem Kalibrierwerkzeug mit einer Einschnürung 5 versehen, so wird erreicht, dass sich das Gummiteil 4 in axialer Richtung an der konischen Umfangsfläche 8 der jeweiligen gegenüberliegenden Fläche des Innenteils 2 abstützt. Auch bei dieser Ausführungsform sind Ausnehmungen 7 vorgesehen, wie es Figur 5 zeigt. Bei einer Version ohne Ausnehmungen wird der axiale Abstützungseffekt noch verstärkt. Die Figuren 5 und 6 zeigen eine Ausführungsform, bei der die axiale Kennlinie und die Wegbegrenzung durch die konische Umfangsfläche 8 definiert werden. Eine derartige Konstruktion ist dann notwendig, wenn eine bestimmte axiale Steifigkeit und auch eine Wegbegrenzung erforderlich sind, wobei jedoch die Einbausituation keine Möglichkeit eines Flansches oder dergleichen in seinen Endbereichen vorsieht.

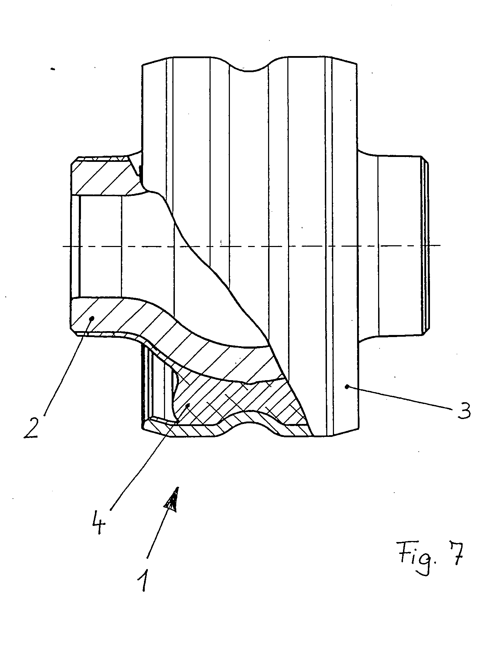

Die in Figur 7 dargestellte Ausführungsform zeichnet sich dadurch aus, dass bei Anwendung in einer Vorderachse eines Fahrzeuges die Lagerbuchse 1 in radialer Richtung hart ausgebildet ist, wobei jedoch die Bewegungen eines Fahrzeuglenkers in der Vorderachse eine weiche Kardanik ausführen soll.

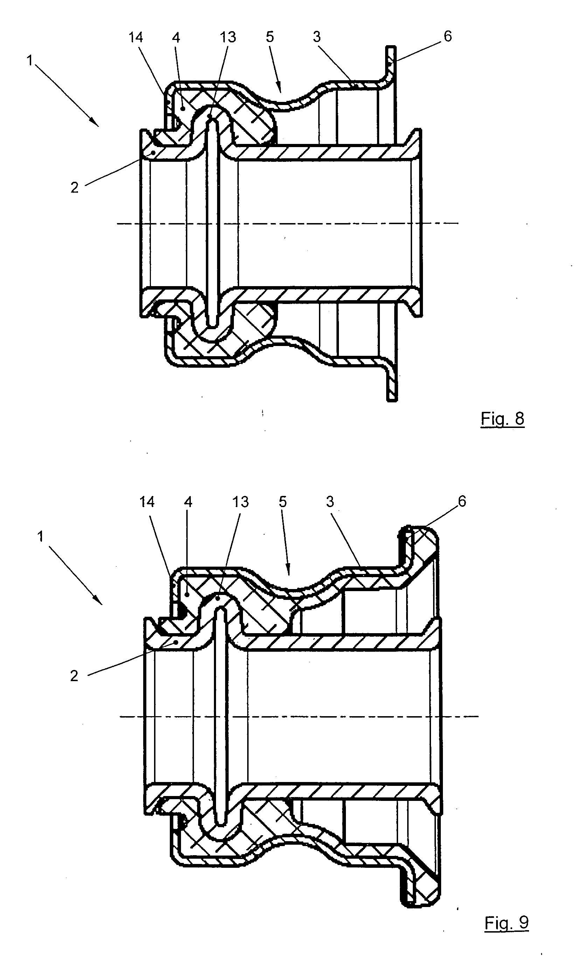

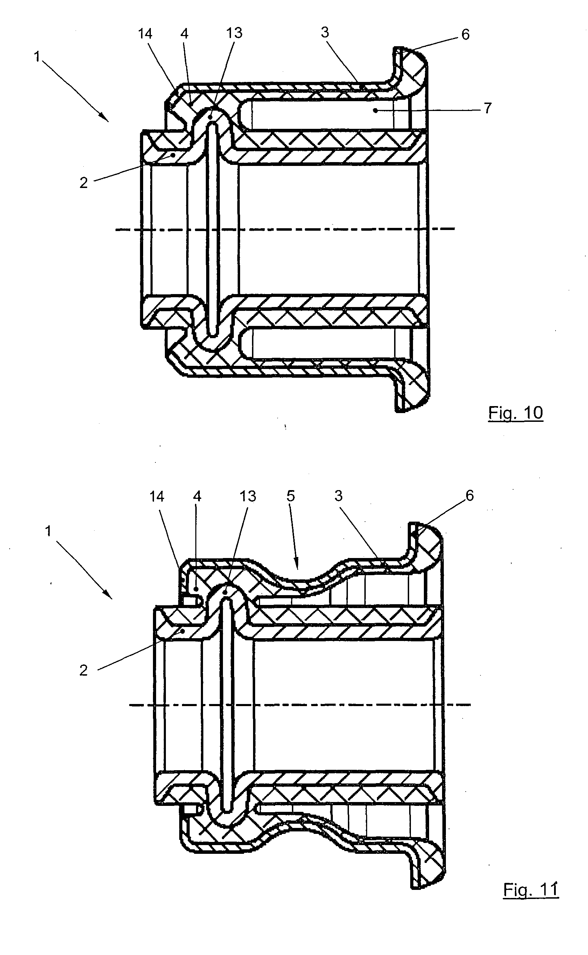

Die in den Figuren 8 bis 11 dargestellte Ausführungsform zeichnet sich dadurch aus, dass das Innenrohr einen radial nach außen gerichteten Absatz 13 aufweist. In diesem Ausführungsbeispiel ist der Absatz 13 durch eine Stauchung des Innerohres 2 gebildet worden. Alternativ hierzu kann der Absatz 13 beispielsweise auch durch einen angeformten oder aufgesetzten Ring ausgebildet werden. Das Außenteil 3 weist in den Figuren 8 bis 11 an einem Ende jeweils eine radial nach verlaufenden Kante 14 auf, wobei in der Figur 10 die Kante 14 vor der Kalibrierung dargestellt ist. Durch die Kalibrierung wird gleichzeitig mit der Einschnürung 5 die Kante 14 in ihre endgültige Lage gebracht wo die Kante 14 etwa senkrecht zur Außenwandung des Außenteils 3 abgewinkelt ist.

Der Absatz 13 am Innenrohr 2 ist in den Figuren 8 bis 11 in axialer Richtung der Lagerachse zwischen der Einschnürung 5 und der Kante 14 des Außenteils 3 angeordnet, so dass der Absatz 13 vom Gummiteil 4 vollständig umgeben ist. Diese Anordnung erlaubt es, dass das Gummiteil 4 gemäß der Figur 8vollständig ohne Haftung zwischen dem Innenrohr 2 und dem Außenteil 3 angeordnet ist. Das Gummiteil 4 wird hierbei lediglich kraft- und7oder formschlüssig zwischen dem Innenrohr 2 und dem Außenteil 3 gehalten.

Die Figur 9 stellt eine weitere Variante dar, in der das Gummiteil 4 lediglich an das Außenteil 3 anvulkanisiert ist und zwischen dem Gummiteil 4 und dem Innenrohr 2 keine Haftung vorhanden ist. Der Absatz 13 erlaubt es, bei den Ausführungsformen gemäß den Figuren 8 bis 11, die axiale Steifigkeit der Lagerbuchse 1 entsprechend den Anforderungen einzustellen oder zu variieren, wobei insbesondere das Kalibrierwerkzeug nicht verändert werden muss, da an dem Außenteil 3 keine Änderungen vorgenommen werden.

In dem in den Figuren 10 und 11 dargestellten Ausführungsbeispiel ist das Gummiteil 4 an dem Innenrohr 2 und an dem Außenteil 3 anvulkanisiert, wobei die Figur 10 die Lagerbuchse 1 vor der Kalibrierung darstellt. Hierbei ist die Kante 14 lediglich um einen bestimmten Winkel, beispielsweise 45°, abgestellt und wird während des Kalibriervorganges zusammen mit der Einschnürung 5 in einem Arbeitsgang in ihre endgültige Lage, wie in Figur 11 dargestellt, gebracht.

### Bezugszeichenliste

- 1 -: Lagerbuchse
- 2 -: Innenrohr
- 3 -: Außenteil
- 4 -: Gummiteil
- 5 -: Einschnürung
- 6 -: Flansch
- 7 -: Ausnehmung
- 8 -: konische Umfangsfläche
- 9 -: Schulter
- 10 -: Ansatz
- 11 -: Bördelung
- 12 -: Absatz
- 13 -: Absatz
- 14 -: Kante

## Patentansprüche

1. Lagerbuchse, bestehend aus einem Innenrohr, einem konzentrisch oder exzentrisch zum Innenrohr angeordneten Außenteil und einem dazwischen eingesetzten Gummiteil,
**dadurch gekennzeichnet,**
**dass** das Außenteil (3) nach der Kalibrierung über mindestens einen Teilbereich seiner axialen Länge mit einer nach radial innen verlaufenden Einschnürung (5) versehen ist.

2. Lagerbuchse nach Anspruch 1,
**dadurch gekennzeichnet,**
**dass** die Einschnürung (5) im Querschnitt gesehen eine sphärische oder kugelförmige Kontur aufweist.

3. Lagerbuchse nach Anspruch 1,
**dadurch gekennzeichnet,**
**dass** die Einschnürung (5) über mindestens einen Teil der Umfangsfläche des Außenteils (3) verlaufend angeordnet ist.

4. Lagerbuchse nach Anspruch 1,
**dadurch gekennzeichnet,**
**dass** das Innenteil (3) auf mindestens einer Stirnseite mit einem Flansch (6) versehen ist.

5. Lagerbuchse nach Anspruch 4,
**dadurch gekennzeichnet,**
**dass** der Flansch (6) form- und/oder kraftschlüssig mit dem Innenrohr (2) verbunden ist.

6. Lagerbuchse nach Anspruch 1,
**dadurch gekennzeichnet,**
**dass** das Gummiteil (4) mindestens eine Ausnehmung (7) aufweist.

7. Lagerbuchse nach Anspruch 1,
**dadurch gekennzeichnet,**
**dass** das Innenrohr (2) auf seinem, dem Gummiteil zugewandten, Außenumfang mindestens auf einem Teilbereich eine konische Umfangsfläche (8) aufweist.

8. Lagerbuchse nach Anspruch 7,
**dadurch gekennzeichnet,**
**dass** der Außenumfang auf mindestens einem Teilbereich eine doppelt konische Umfangsfläche (8) aufweist.

9. Lagerbuchse nach Anspruch 1.
**dadurch gekennzeichnet,**
**dass** das Innenrohr (2) einen radial nach außen gerichteten Absatz (13) aufweist.

10. Lagerbuchse nach einem der Ansprüche 1 bis 9,
**dadurch gekennzeichnet,**
**dass** das Außenteil (3) nach der Kalibrierung an zumindest einem Ende eine nach radial innen verlaufenden Kante (14) aufweist.

11. Lagerbuchse nach Anspruch 9 und 10,
**dadurch gekennzeichnet,**
**dass** der nach außen gerichtete Absatz (12) des Innenrohres (2) in axialer Richtung der Lagerbuchse (1) zwischen der nach radial innen verlaufenden Einschnürung (5) und der zumindest einen nach radial innen verlaufenden endseitigen Kante (14) des Außenteils (3) angeordnet ist.

12. Lagerbuchse nach einem der Ansprüche 1 bis 11,
**dadurch gekennzeichnet,**
**dass** das Gummiteil (4) entweder am Innenrohr (2) und dem Außenteil (3) anvulkanisiert ist oder dass das Gummiteil (4) am Innenrohr (2) oder am Außenteil (3) anvulkanisiert ist.

13. Lagerbuchse nach einem der Ansprüche 1 bis 11,
**dadurch gekennzeichnet,**
**dass** das Gummiteil (4) zwischen dem Innenrohr (2) und dem Außenteil (3) kraft- und/oder formschlüssig aufgenommen ist.
